# EUROPEAN PATENT APPLICATION

(11) **EP 4 361 801 A1**
(43) Date of publication of application: **01.05.2024**
(21) Application number: 22203746.7
(22) Date of filing: 26.10.2022
(51) Int. Cl.: G06F 8/71, G06F 9/50, G06F 11/34

(54) **METHOD FOR AUTOMATICALLY MAINTAINING AN INFRASTRUCTURE AS CODE STATE OF A RESOURCE SPACE HOSTED ON A CLOUD PLATFORM**

(71) Applicant: AGARIK SAS, 93400 St Ouen sur Seine (FR)
(72) Inventor: GORALSKI, Lukasz, Bydgoszcz (PL); GAJEWSKI, Jaroslaw, Grudziadz (PL); CLAPA, Konrad, Lodz (PL)
(74) Representative: Cabinet Camus Lebkiri

(57) **Abstract**

According to an aspect of the invention, it is provided a method for automatically maintaining an laC state of a resource space hosted on a cloud platform, the method comprising the following steps:
- Detection of a specific label associated with the resource space after a relevant modification of said resource space;
In the case the specific label is detected, then:
- Filling a template with at least one monitoring metric;
- Cloning a remote repository from an internet hosting service;
- Writing the filled template into the local repository;
- Pushing the local repository to the remote repository;
- Monitoring of the resource space by deployment of the monitoring metric upon detection of the push;
Otherwise, in the case the specific label has been deleted:
- Cloning the remote repository;
- Deletion of the filled template from the local repository;
- Pushing the local repository to the remote repository;
- Cancelation of the monitoring upon deletion of the monitoring metric.

## Description

### TECHNICAL FIELD

The technical field of the invention is one of monitoring configuration modifications of cloud platform services. More precisely, it is one of monitoring configuration modifications of a resource space hosted on a cloud platform.

The present invention concerns a method for automatically maintaining an Infrastructure as Code state of monitoring metrics of a resource space hosted on a cloud platform. The present invention also relates to system configured to implement said method.

### BACKGROUND OF THE INVENTION

It is known that cloud management model relies on Infrastructure as Code (laC) services, for example Terraform^{™}, to define the desired state of a public cloud resource space. When the code is applied, the resource space is created, and one or more resources are allocated to it. A state file is also created containing the configuration information that details how the resource space should be built and what resources are allocated.

Consequently, any modification manually applied to the resource space configuration without updating the resource definition in the code will result in discrepancies between the current resource space state and the stored configuration in the state file. Therefore, such discrepancies will cause problems when the code is executed again, as the changes done outside of laC service are automatically detected and reverted.

A solution known from the art requires creating the configuration files and applying the code manually. This solution then involves more steps to be implemented as one needs to create the monitoring metrics definition beforehand and then apply it to the code for the modifications to be accounted for and not cancelled when executing the code again.

Hence, there is a need for means that allow for maintaining a resource space configuration after it has been manually modified.

### SUMMARY OF THE INVENTION

An object of the invention is to provide a method and a system for automatically maintaining laC code state when the configuration of a resource space has been modified by adding a label.

By resource space is meant a space on a cloud that contains all the resources allocated by the laC service and that have been requested by a user using the laC service. For example, a resource space is a project as per Google Cloud Platform^{™}.

To this end, according to a first aspect of the invention, it is provided a method for automatically maintaining an Infrastructure as Code state of a resource space hosted on a cloud platform, the method comprising the following steps:
- Detection by a dedicated script of a specific label associated with the resource space after a relevant modification of said resource space;

In case the specific label is detected, then:
   - Filling a template with required data, the data containing at least one monitoring metric;
   - Cloning a remote repository from an internet hosting service;
   - Writing the filled template into the local repository;
   - Pushing the local repository to the remote repository on the internet hosting service;
   - Monitoring of the resource space by deployment of the monitoring metric upon detection of the push on the internet hosting service;
Otherwise, in the case the specific label has been deleted:
   - Cloning the remote repository from the internet hosting service;
   - Deletion of the filled template from the local repository;
   - Pushing the local repository to the remote repository on the internet hosting service;
   - Cancelation of the monitoring of the resource space upon deletion of the monitoring metric.

Thanks to the invention, the code state is now automatically maintained when a modification of a resource space configuration is carried out by a user. The resource space state is now reflected in code definitions in a fully automated way.

The proposed solution detects a modification on a cloud resource space by detecting a specific label associated with the resource space and creates a configuration file and apply it to the cloud resource space based on the relevance of the modification. Advantageously, the invention has a predictable, repeatable outcome thanks to the association of the resource space with the specific label and using predefined laC templates.

Moreover, the cloud management is more easily achieved thanks to the method automatically filling the template with monitoring metrics, which denies the need to manually create the template.

Finally, as the method relies on filling a template with one or more monitoring metrics, the method can easily adapt to upgrades of the cloud platform services as only the template would have to be adapted to those upgrades. It can be noted that, although only monitoring metrics are mentioned to fill the template, other data can be filled into the template, for example to achieve a specific configuration or behaviour of the resource space.

Apart from the characteristics mentioned above in the previous paragraphs, the method according to a first aspect of the invention may have one or several complementary characteristics among the following characteristics considered individually or in any technically possible combinations.

According to an embodiment, during the deployment of the monitoring metric, a state storing file is created or updated to contain a metrics configuration.

Thanks to this embodiment, the metrics configuration is stored in a dedicated file that can be further used to build or rebuild the associated resource space, including the configuration modifications.

According to an embodiment, during the cancellation of the monitoring, the metrics configuration is removed from the state storing file after a previous creation or update of said state storing file.

Thanks to this embodiment, the state storing file is updated when the label associated with the resource space is deleted, thus maintaining consistency between the current state of the resource space and the data stored in the state storing file.

According to an embodiment, the method according to the first aspect further comprises a step of saving relevant modifications applied to the resource space by updating a state file based on the push, after the step for deploying the monitoring metric and/or after the step for cancelling the monitoring, the state file containing at least one configuration data of the resource space

Thanks to this embodiment, the modification applied to the resource space is saved inside the state file, which contains all the necessary configuration data to build or rebuild the resource space while accounting for the modifications.

According to an embodiment, the modification applied to said resource space is relevant when the modification causes a discrepancy between a current state of the resource space and a stored configuration of said resource space.

Thanks to this embodiment, the method is only applied when a modification would hinder the build or rebuild of the resource space to its current state, including the modification.

According to an embodiment, the required data also contain identification data, the identification data being at least one identifier of the resource space and/or at least one identifier of a resource space where the monitoring is hosted.

Thanks to this embodiment, the template is only filled with data related to the associated resource space, making the template concerning only one resource space in a unique manner.

According to an embodiment, the dedicated script runs in an event-driven application of the cloud platform.

Thanks to this embodiment, the dedicated script runs inside the cloud platform environment and thus does not need an additional or external module to be implemented.

According to an embodiment, the remote repository is cloned into the event-driven application.

Thanks to this embodiment, the repository is cloned inside the cloud platform environment, without needing an additional or external module.

According to an embodiment, the filled template written into the local repository possesses a name containing the at least one resource space identifier.

Thanks to this embodiment, the template is uniquely identified from other templates and explicitly refers to the associated resource space.

According to an embodiment, the state storing file is stored on a dedicated storage data container of the cloud platform.

Thanks to this embodiment, the state monitoring file is written inside the cloud platform, without needing an additional or external module.

According to a second aspect of the invention, it is provided a cloud platform configured for automatically maintaining an Infrastructure as Code state of a resource space hosted on said cloud platform, the cloud platform comprising:
- A managed compute platform comprising an event-driven application configured to run a dedicated script for detecting if a specific label is associated to, modified or removed from a resource space, for detecting if the label corresponds to a relevant modification, for cloning a remote repository from an internet hosting service to create a state storing file with a metrics configuration for the resource space, and to push a modification applied to the local repository to the remote repository on the internet hosting service;
- A template generator configured to create or delete a template and to fill said template with at least one monitoring metric and an appropriate value.

Thanks to this second aspect, the method from the first aspect can be easily implemented using few modules without heavy coding.

According to an embodiment, the cloud platform according to the second aspect further comprises a cloud builder module configured to trigger a resource space build based on the push to the internet hosting service for applying Infrastructure as Code service code for a future building of the resource space.

Thanks to this embodiment, the code of the laC service can be maintained according to the applied modification, therefore allowing to maintain said modification for a future build or rebuild of the resource space.

According to an embodiment, the cloud platform according to the second aspect further comprises an asset inventory configured to detect a relevant modification of the resource space, and a Pub/Sub module configured to transfer a message, upon detection of the resource space modification, to the managed compute platform.

Thanks to this embodiment, the method according to the first aspect of the invention can be triggered when the asset inventory detects the resource space modification.

According to a third aspect of the invention, it is provided a computer program product comprising instructions which, when the program is executed by a computer, causes the computer to carry out the method according to the first aspect of the invention.

According to a last aspect of the invention, it is provided a computer-readable medium comprising instructions which, when executed by a computer, cause the computer to carry out the method according to the first aspect of the invention.

The invention and its various applications will be better understood by reading the following description and examining the accompanying figures.

### BRIEF DESCRIPTION OF THE FIGURES

The figures are presented for information purposes only and in no way limit the invention.
- Figure 1 schematically represents a cloud platform according to the invention.
- Figure 2 is a flow chart of a method according to the invention.

### DETAILED DESCRIPTION OF THE PREFERRED EMBODIMENT

Some embodiments of devices and methods in accordance with embodiments of the present invention are now described, by way of example only, and with reference to the accompanying drawings. The description is to be regarded as illustrative in nature and not as restrictive.

Modern public cloud management involves Infrastructure as Code (laC) to provide standardization, reproducible configurations, and version control as well as CI/CD - "Continuous Integration/Continuous Delivery" - pipelines giving visibility and traceability of infrastructure builds. The solution herein described proposes an event-driven approach using the following method and system to deploy monitoring metrics on a cloud platform resource space by only associating a label with said resource space. The disclosed method fills monitoring metrics in a template and applies it to a cloud resource space based on the label, stores the template changes in a repository on an internet hosting service, and keeps the laC service code up to date.

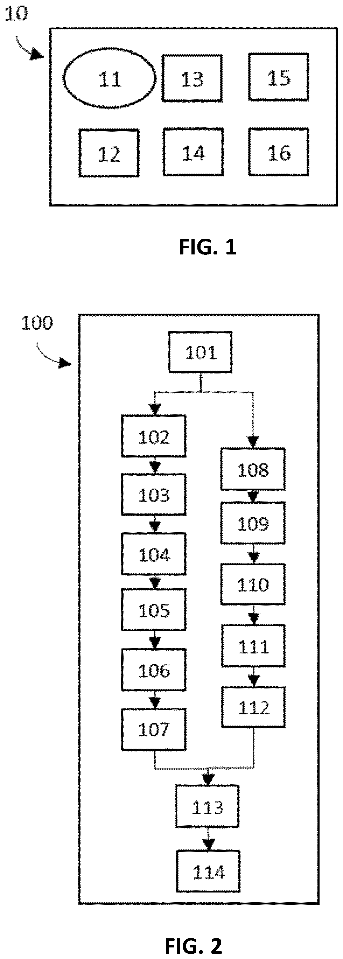

A first aspect of the invention relates to a cloud platform 10 as illustrated figure 1. Examples of cloud platform 10 can be Google Cloud Platform^{™} (GCP), Amazon Web Services^{™}, Microsoft Azure^{™}, Oracle Cloud Infrastructure^{™}, etc. The cloud platform 10 is configured for hosting one or more resource spaces 11, each defined by a configuration. The resource space 11 is a gathering of resources automatically allocated according to the configuration using an laC service (not represented) comprised in the cloud platform 10. For example, the laC service is Terraform^{™}, Ansible^{™} or Puppet^{™}. The resources can also be manually allocated via a resource space management module, using a graphical interface of said resource management module. By "resource space" 11 is then meant a space in the cloud platform 10 to hold all deployed resources for this resource space. The resource space 11 can be uniquely identified to organize all resource spaces 11 hosted on the cloud platform 10. The resource space identifier can be freely defined by a user or an administrator of said cloud platform 10. The laC configuration of the resource space 11 contains all the necessary information for building and/rebuilding the resource space 11. At creation of the resource space 11, the configuration is saved in a state file for further storing.

The cloud platform 10 is also configured for automatically maintaining an Infrastructure as Code state. To achieve this, the cloud platform 10 comprises five modules: an asset inventory 12, a managed compute platform 13, a template generator 14, a Pub/Sub module 15, and a cloud builder module 16.

The asset inventory 12 is a metadata inventory service that allows to view, monitor, and analyse all cloud platform assets across resource spaces and services. The asset inventory 12 is configured to detect, using a cloud native log capturing mechanism, also called Asset Inventory feed, a modification applied to the resource space 11. The modification can be the result of a manual action by the user or by the administrator. The modification is a modification of the configuration of the resource space 11. Therefore, such modification may cause discrepancies between the modified configuration of the resource space 11 and the configuration stored in the state file.

The managed compute platform 13 enables to run containers that are invocable via requests or events. It comprises an event-driven application built on the managed compute platform 13 from an image stored in one of the cloud platform 10 services. Such service is, for example, Artifact Registry^{™}.

The event-driven application is configured to run a dedicated script for detecting if a specific label is associated with the resource space or deleted. The dedicated script also allows for repository cloning and pushing as well as creating and deleting files.

The template generator 14 is configured to manage, generate, delete, and fill a template associated with the resource space 11.

The Pub/Sub module 15, referring to a "publish-subscribe" mechanism, is configured to emit one or more messages. In particular, it is configured to transfer a message, upon detection of the resource space modification, to the managed compute platform 13.

The cloud builder module 16 is configured to build the resource space 11 based on the configuration of said resource space 11, stored in the state file. More precisely, this module is configured to build the resource space 11 applying the laC service code. For example, the cloud builder module 16 can import source code from a variety of repositories or cloud storage spaces, execute a build from predefined specifications, and produce artifacts such as Kubernetes^{™} clusters or virtual machines.

In the following, for illustration purpose and comprehension ease, it is considered that the cloud platform 10 is the Google Cloud Platform^{™}, the laC service is Terraform^{™}, the dedicated script is Python^{™} based, the manage compute platform 13 is Cloud Run^{™}, the template generator 14 is Jinja2 and the cloud builder module 16 is Cloud Build^{™}. Another example would be to use Microsoft^{™} Azure^{™} as the cloud platform 10 with Azure Container Interfaces^{™} as the manage compute platform 13 and Azure DevOps^{™} as the cloud builder module 16. In the Azure^{™} case, the laC service and the template generator 14 can also be Terraform^{™} and Jinja2, respectively.

A second aspect of the invention relates to a method for automatically maintaining an Infrastructure as Code state for the resource space 11 hosted on the cloud platform 10. The method 100, illustrated on figure 2, comprises thirteen steps numbered from 101 to 113. The method 100 is advantageously implemented on the cloud platform 10 via the modules it is composed of.

Step 101 of the method 100 is a step for detecting a specific label associated to the resource space 11. The detection is performed by the dedicated script, running on the event-driven application of the manage compute platform 13.

The specific label is attached or associated with the resource space 11 and is handled by the event-driven application to determine whether a relevant modification of the resource space 11 configuration has been applied. The specific label comprises a key and a value. For example, the specific label is "atosmanaged" and the value is either "true" or "false". In this case, when the value is "true", it indicates that the manually applied modification is relevant; and when the value is "false", it indicates that the manual modification is not relevant or that no modification has been applied to the resource space 11. The specific label can be:
- Automatically associated with the resource space 11 using the laC service, for example thanks to a push to repository function of said laC service to the resource space 11, managed by the laC service;
- Manually associated with the resource space 11, which has been manually created, i.e., not managed by the laC service;
- Manually associated with the project 11, which is managed by the laC service.

The value of the specific label indicates whether the modification of the resource space 11 is relevant and has to be further pushed to the laC service code and/or pushed to the state file and/or is required for a future build of the resource space 11. If the modification is relevant, a monitoring metric can also be pushed for monitoring said resource space 11.

If the resource space 11 modification is not relevant, i.e., the modification does not cause a discrepancy between the current state of the resource space 11 and the stored configuration in the state file, then the method 100 stops after step 101.

In the case the resource space 11 modification is relevant, the method 100 further proceeds to step 102, which is a step for filling a template. The template generator 14 fills the template with required data, accordingly to resource space 11 configuration. Preferentially, the template is defined before the event-driven application is deployed to the cloud platform 10. The template is then filled when the appropriate label is detected and identified with a unique template identifier.

An example of the template is as follows:

```
 module "{{ projectld }}_dcs-assist" {
       source = "git@github.com:GLB-CES-PublicCloud-Google/dcs-gcp-
       code.git//modules/metric?ref=v1.6.0"
      workload_project_id = "{{ projectld }}"
       tooling_project_id = "{{ tooling ProjectId }}"
       custom_metrics = [
             {
             name = "route-changes-metric"
             filter = "resource.type=\"gce_route\" AND
             protoPayload.methodName=∼\"compute.routes.delete\" OR
             protoPayload.methodName=∼\"compute.routes.insert\‴′
             },
             {
             name = "firewall-changes-metric"
             filter = "resource.type=\"gce_firewall_rule\" AND
             protoPayload.methodName=∼\"compute.firewalls.patch\" OR
             protoPayload.methodName=∼\"compute.firewalls.insert\""
             }
       ]
       }
```

The required data at least comprise one monitoring metric. By "monitoring metric" is meant a metric used to monitor the health and usage of resources allocated to the resource space 11. For example, it can be a monitoring of firewall changes, network routing changes, Identity and Access Management (IAM) changes, audit configuration changes, etc. The monitoring metric can be a custom log-based metric.

The required data can also include identification data, such as at least one identifier of the resource space 11. It is possible that the monitoring is hosted on another resource space dedicated to monitoring resource spaces. In this case, the identification data can also include an identifier of the monitoring resource space. This way, the resource space 11 and the host for monitoring the resource space 11 are clearly and uniquely identified in the filled template.

The template contains one or more keys of monitoring metrics. Each key is coupled with a value of monitoring metrics by the template generator 14. Each key-value couple is contained inside the template. The key defines a property of the metric, for example a name or a threshold of the metric. The associated value then indicates what is the property of the metric. For example, the name value is the name or the metric, such as "firewall-change-metric", and the threshold value is "dropped-bytes-count" for counting incoming bytes dropped by the firewall. The threshold can be further used for emitting alerts when said monitored metric exceeds said threshold. In the template example above, three components filter are declared for monitoring the firewall:
- \"gce_firewall_rule\" is used to make sure that the metric threshold will be crossed only when the changes are in respect to that resource
- \"compute.firewalls.patch\" and \"compute.firewalls.insert\" are used to make sure that the metric threshold will be crossed when firewall rule is modified, deleted, or created.

Advantageously, using such template guarantees that the method will still work with further upgrades of one or more services of the cloud platform 10, as the laC service configuration files can be expanded or changed in the future.

When the monitoring resource space is used for monitoring, it contains definitions of alerts which are raised when the monitoring metrics thresholds are crossed. Those alerts are then used to emit to a message to the cloud platform and be raised as incidents. Such architecture makes it easier to pass the messages to the cloud platform.

Method 100 further proceeds to step 103, which is a step for cloning a repository from an internet hosting service (not represented). The internet hosting service is a service for storing and sharing repositories and/or files with one or more users or devices. For example, the internet hosting service is GitHub^{™}. For understanding ease, the repository on the internet hosting service is named "remote repository" and the repository created by cloning said remote repository is named "local repository". The remote repository is cloned into the event-driven application of the managed compute 13 platform by the dedicated script. The remote repository is dedicated to the event-driven application, and it is meant only to contain the code produced by the event-driven application. Preferentially, the remote repository does not contain the state file associated with the resource space.

The method 100 further proceeds to step 104, which is a step for writing the filled template into the local repository, located in the event-driven application. The filled template written into the local repository possesses a name containing the at least one resource space identifier.

The method 100 further proceeds to step 105, which is a step for pushing the local repository to the hosted directory on the internet hosting service. For understanding ease, the remote repository after being pushed is named "pushed repository". This way the filled template is now hosted inside the pushed repository on the internet hosting service and is now available for all users and devices allowed to access the hosted/pushed repository. In other words, all changes applied to the template are synchronized with the template in the remote repository. The local repository is pushed, using classical push techniques, by the dedicated script.

The method 100 further proceeds to step 106, which is a step for monitoring the resource space 11. The monitoring is achieved by deploying the at least one monitoring metric contained in the filled template in the pushed repository. The deployment is triggered by the cloud builder module 16 when the push on the internet hosting service of the pushed repository is detected by the cloud builder module 16. The monitoring then consists in monitoring the monitoring metric deployed based on the filled template. For example, the monitoring can be carried out by a monitoring service, such as in Atos Digital Cloud Services^{™}, which in turn generates alerts and incidents based on events detected during the monitoring.

During the preceding step 106 for monitoring the resource space 11, the method 100 further proceeds to step 107, which is a step for updating a state storing file. The state storing files contains state data about managed resources allocated to the resource space 11, as well as the configuration of the resource space 11. This step consists in storing a metric configuration into the state storing file. The metric configuration comprises a key-value couple where the key refers to the metric monitored and the value to the value of the threshold. If the state storing file does not exist, it is created, and the metric configuration is stored inside it. The state storing file is stored inside a dedicated storage data container of the cloud platform 10. The data container is a container for holding data, such as a GCP bucket.

When the resource space 11 is manually created outside of the laC service, no state file is created during creation of the resource space. In this case, the state storing file does not contain the data about managed resources allocated to the resource space 11 and the configuration of the resource space 11 but only contains the metric configuration. It is, however, possible to apply the laC service code to create the state file by building the resource space manually created. Therefore, the state storing file now contains the data about managed resources allocated to the resource space 11, as well as the configuration of the resource space 11.

In the case the dedicated script detects that the specific label associated with the resource space 11 has been deleted, then the method 100 further proceeds to step 108 which is a step for cloning the remote repository from the internet hosting service, such as GitHub^{™}, into the event-driven application. The remote repository can also be a previously pushed repository, as a previous push can have been performed, according to aforementioned step 105.

The method 100 further proceeds to step 109 which is a step for deleting the filled template from the local repository of previous step 108. The filled template to be deleted is uniquely identified with the at least one resource space identifier in its name. The filled template deletion is performed by the dedicated script.

The method 100 further proceeds to step 110, which is a step for pushing the local repository to the repository on the internet hosting service. This way, the template deletion applied to the local repository is maintained into the remote repository or into the previously pushed repository. For understanding ease, this newly pushed repository is named "cleared repository". The local repository is pushed, using classical push techniques, by the dedicated script.

The method 100 further proceeds to step 111, which is a step for cancelling the monitoring of the resource space 11. The cancelation is performed by deletion of the monitoring metrics upon detection of the push on the internet hosting service by the cloud builder module 16, from which the filled template is absent.

The method 100 further proceeds to step 112, which is a step for removing the metric configuration from the state storing file during the cancellation of the resource space monitoring. In this case, the state storing file has been previously created or updated, for example using aforementioned step 107 for a previous specific label detection.

The method 100 further proceeds to step 113, which is a step for saving modifications applied to the resource space 11 by updating the state file. The state file is updated based on the push carried out at step 105 or at step 110. The state file now contains the current configuration of the resource space 11, after modification. The update of said state file is triggered after step 106 for deploying the monitoring metric and/or after step 111 for cancelling the resource space monitoring and is performed by the cloud builder module 16 which triggers the execution of the laC code.

Thanks to the cloud platform 10 comprising the asset inventory 12, the method 100 can be triggered when said asset inventory 12 detects the modification applied to resource space 11. The modification detection is performed using the Asset Inventory feed. When the modification is detected, a message is transferred to the managed compute platform 13 by the Pub/Sub module 15. The message contains one or more key and an associated value. The message contains a part for the current state of the resource space 11 and a part for a previous state of the resource space 11.

For example, the message contains the "atosmanaged" key which is associated with a "false" value in the previous state part and associated with a "true" value in the current state part. This way, the dedicated script, running on the managed compute platform 13 in the event-driven application, can compare the values of the "atosmanaged" key from the two parts, and can detect if the change of the "atosmanaged" key induces a relevant modification of the resource space 11. In this case, because the value of the "atosmanaged" key has changed from "false" to "true", the dedicated script detects the modification as being relevant and the method may further proceed through steps 102 to 107.

In another example, the "atosmanaged" key is associated with a "false" or a "true" value in the previous state part, but the "atosmanaged" key is absent from the current state part. Thus, the dedicated script detects that the "atosmanaged" key has been deleted and the method may further proceed through steps 108 to 112.

Again, in another example, the "atosmanaged" key is associated with a "false" value in the current state part, whatever the value or absence of this key in the previous state part. The dedicated script then detects that the modification applied to the resource space 11 is not relevant and the execution of the method 100 stops after step 101.

The message may contain one or more sections. For example, the message contains one or several of the following sections in the current state part: "asset", "resource", "data" or "labels"; and contains one or more of the following sections in the previous state part: "priorAsset", "resource", "data" or "labels". The "atosmanaged" key can be contained in either or both of the "label" section of the previous state part and the current state part.

An example of the message is provided hereafter:

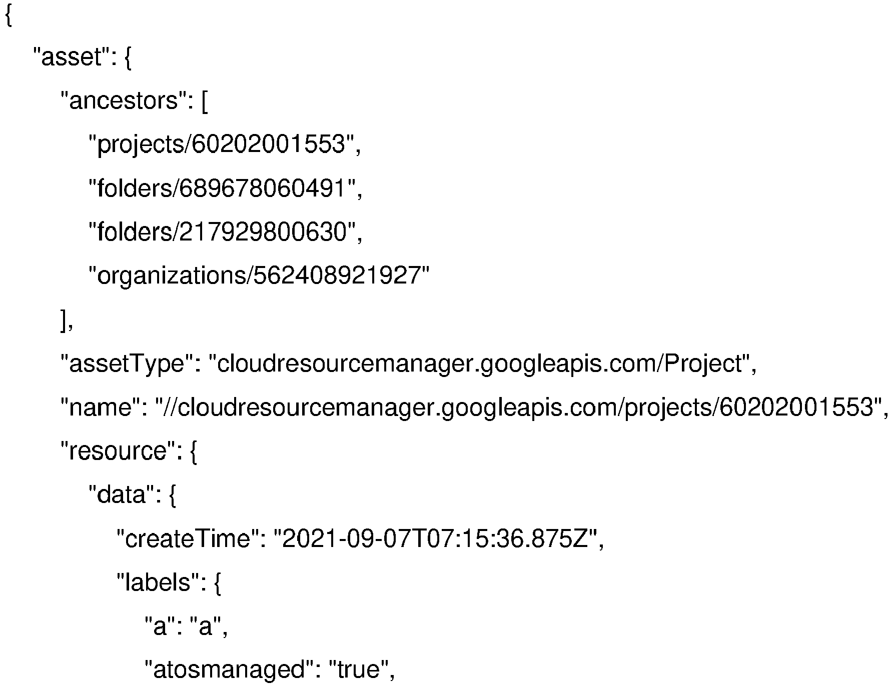

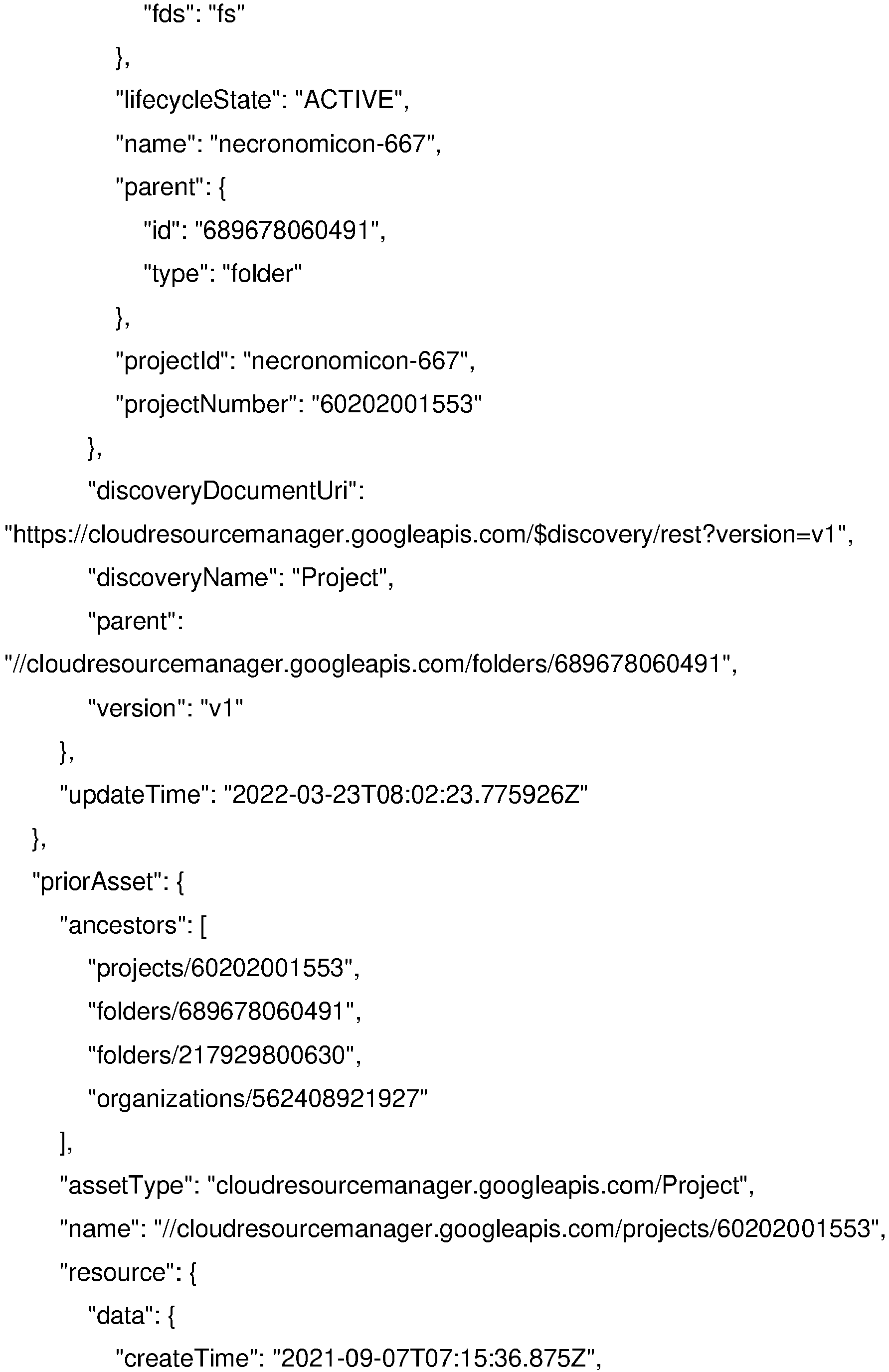

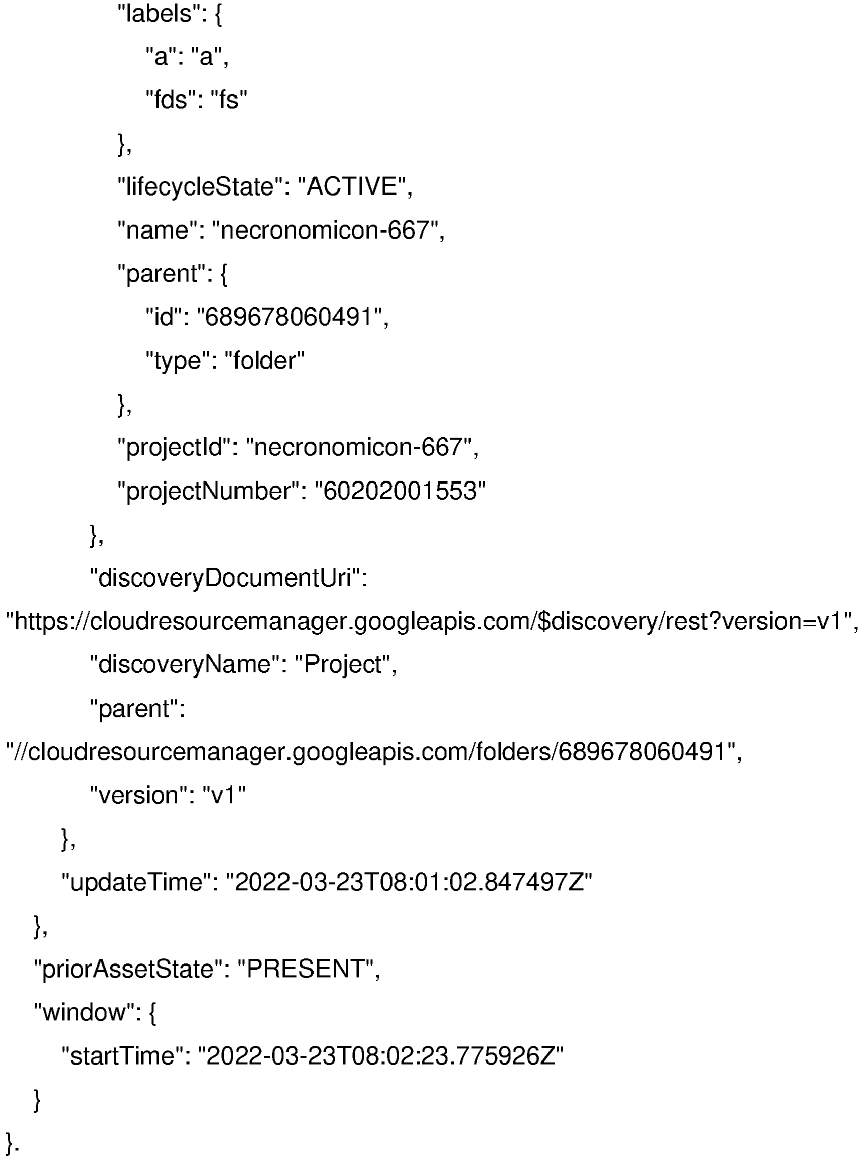

The cloud platform 10 contains instructions which, when executed, trigger the execution of the method 100. The instructions can be stored in a memory of the cloud platform, for example in a memory of the managed compute platform 13. The execution of the instructions can be carried out in the event-driven application of the manage compute platform 13.

According to an embodiment, the filled template can be further expanded to perform other functionalities that are compatible with the laC service as well. For example, a "deny-all" firewall rule can be added to the template to block all traffic to the resource space.

According to an embodiment compatible with the previous one, the method 100 can contain an optional supplementary step 114, after step 113 for updating the state file. The optional step 114 is a step for triggering a resource space build based on the pushed repository or on the cleared repository, therefore applying the resource space build to the laC service code for a future building of the resource space 11.

As previously mentioned, the present invention works both for resource spaces managed and not managed using the laC service code. In each case, the monitoring metric deployment is achieved as expected.

## Claims

1. Method (100) for automatically maintaining an Infrastructure as Code state of a resource space (11) hosted on a cloud platform (10), the method (100) comprising the following steps:
- Detection (101) by a dedicated script of a specific label associated with the resource space (11) after a relevant modification of said resource space (11);
In the case the specific label is detected, then:
- Filling (102) a template with required data, the data containing at least one monitoring metric;
- Cloning (103) a remote repository from an internet hosting service;
- Writing (104) the filled template into the local repository;
- Pushing (105) the local repository to the remote repository on the internet hosting service;
- Monitoring (106) of the resource space (11) by deployment of the monitoring metric upon detection of the push on the internet hosting service;
Otherwise, in the case the specific label has been deleted:
- Cloning (108) the remote repository from the internet hosting service;
- Deletion (109) of the filled template from the local repository;
- Pushing (110) the local repository to the remote repository on the internet hosting service;
- Cancelation (111) of the monitoring of the resource space (11) upon deletion of the monitoring metrics.

2. Method (100) according to the preceding claim, wherein, during the deployment of the monitoring metric, a state storing file is created (107) or updated to contain a metrics configuration.

3. Method (100) according to the preceding claim, wherein, during the cancelation (111) of the monitoring, the metrics configuration is removed (112) from the state storing file after a previous creation or update (107) of said state storing file.

4. Method (100) according to any of the preceding claims, further comprising a step (113) of saving relevant modifications applied to the resource space (11) by updating a state file based on the push, after the step for deploying (106) the monitoring metric and/or after the step for cancelling the monitoring (111), the state file containing at least one configuration data of the resource space (11).

5. Method (100) according to any of the preceding claims, wherein the modification applied to said resource space (11) is relevant when the modification causes a discrepancy between a current state of the resource space (11) and a stored configuration of said resource space (11).

6. Method (100) according to any of the preceding claims, wherein the required data also contain identification data, the identification data being at least one identifier of the resource space (11) and/or at least one identifier of a resource space where the monitoring is hosted.

7. Method (100) according to any of the preceding claim, wherein the dedicated script runs in an event-driven application of the cloud platform (10).

8. Method (100) according to the preceding claim, wherein the remote repository is cloned into the event-driven application.

9. Method (100) according to any of the preceding claims, wherein the filled template written into the local repository possesses a name containing the at least one resource space identifier.

10. Method (100) according to any of the preceding claims, wherein the state storing file is stored on a dedicated storage data container of the cloud platform (10).

11. Cloud platform (10) configured for automatically maintaining an Infrastructure as Code state of a resource space (11) hosted on said cloud platform (10), the cloud platform (10) comprising:
- A managed compute platform (13) comprising an event-driven application configured to run a dedicated script for detecting if a specific label is associated to, modified or removed from the resource space (11), for detecting if the label corresponds to a relevant modification, for cloning a remote repository from an internet hosting service to create a state storing file with a metrics configuration for the resource space (11), and to push a modification applied to the local repository to the remote repository on the internet hosting service;
- A template generator (14) configured to create or delete a template and to fill said template with at least one monitoring metric and an appropriate value.

12. Cloud platform (10) according to the preceding claim further comprising a cloud builder module (16) configured to trigger a resource space build based on the push to the internet hosting service for applying Infrastructure as Code service code for a future building of the resource space (11).

13. Cloud platform (10) according to any of claims 11 or 12 further comprising an asset inventory (12) configured to detect a relevant modification of the resource space (11), and a Pub/Sub module (15) configured to transfer a message, upon detection of the resource space modification, to the managed compute platform (13).

14. Computer program product comprising instructions which, when the program is executed by a computer, causes the computer to carry out the method (100) according to any one of claims 1 to 11.

15. Computer-readable medium comprising instructions which, when executed by a computer, cause the computer to carry out the method (100) according to any one of claims 1 to 11.
